# EUROPÄISCHE PATENTSCHRIFT

(11) **EP 2 452 805 B1**
(45) Veröffentlichungstag und Bekanntmachung des Hinweises auf die Patenterteilung: **24.06.2015**
(21) Anmeldenummer: 10450176.2
(22) Anmeldetag: 12.11.2010
(51) Int. Cl.: B29C 65/36, F16L 47/03

(54) **Verfahren zum Verbinden zweier Schüsse einer Fernwärmeleitung**
Method for connecting two sections of a district heating conduit
Procédé de liaison de deux sections d'une conduite de chauffage à distance

(43) Veröffentlichungstag der Anmeldung: 16.05.2012
(73) Patentinhaber: KE-KELIT Kunststoffwerk Gesellschaft m.b.H., 4020 Linz (AT)
(72) Erfinder: Halada, Lucian, Dipl.-Ing., 4040 Linz (AT)
(74) Vertreter: Patentanwaltskanzlei Hübscher

(56) Entgegenhaltungen:
- DE-B1- 1 665 218
- DE-T2- 69 626 391

## Beschreibung

Die Erfindung bezieht sich auf ein Verfahren zum Verbinden zweier Schüsse einer Fernwärmeleitung, die jeweils ein Stahlrohr zur Führung eines Wärmeträgers, ein Mantelrohr aus einem thermoplastischen Kunststoff zur Umhüllung einer Wärmedämmung sowie eine thermoplastische Verbindungsmuffe für die Mantelrohre aufweisen, um deren Enden nach einem Verschweißen der Stahlrohre Streifen eines Streckmetallgitters als Einlage spielfrei gelegt werden, bevor die Verbindungsmuffe auf die Mantelrohre aufgeschoben und die Enden der Mantelrohre mit der Verbindungsmuffe durch ein elektrisches Erwärmen der Einlagen verschweißt werden.

Zum Verbinden der einzelnen Schüsse einer Fernwärmeleitung müssen zunächst die für den Wärmeträger vorgesehenen Stahlrohre miteinander verschweißt werden, bevor die eine Wärmedämmung umhüllenden Mantelrohre aus einem thermoplastischem Kunststoff miteinander über eine thermoplastische Verbindungsmuffe verbunden werden können. Zur flüssigkeitsdichten Verbindung der Verbindungsmuffe mit dem jeweiligen Mantelrohrende ist es bekannt, die Fügezone aufzuschmelzen, um eine entsprechende Schweißverbindung zu erhalten. Zu diesem Zweck kann in der Fügezone eine elektrisch Widerstandsheizung vorgesehen werden, die allerdings bei einer zu engen Verlegung des Heizleiters die Gefahr eines Kurzschlusses und bei einer zu weiten Verlegung die Gefahr von Kaltstellen im Bereich der Schweißverbindung mit sich bringt. Werden elektrisch isolierte Heizleiter eingesetzt, so wird ein die Schweißverbindung beeinträchtigender zusätzlicher Werkstoff in die Fügezone eingebracht.

Um die Verbindung zwischen der Verbindungsmuffe und den Mantelrohren zu verbessern, wurde bereits vorgeschlagen (EP 0 258 827 B1), als Heizleiter einen Streifen eines Streckmetallgitters in mehreren schraubenförmigen Windungen um das Ende des jeweiligen Mantelrohres zu legen, sodass der im Bereich dieses Heizleiters aufgeschmolzene Kunststoff die Gittermaschen durchsetzt. Nachteilig ist allerdings, dass an den beiden Enden des Streifens eines Streckmetallgitters Kontaktfahnen vorgesehen werden müssen, die zum Anschluss an eine elektrische Spannungsquelle in axialer Richtung entlang des jeweiligen Mantelrohrs aus der aufgeschobenen Verbindungsmuffe herausgeführt werden, was eine Isolierung der die Windungen überbrückenden Kontaktfahne gegenüber den Windungen bedingt. Außerdem bringen die über die Verbindungsmuffe axial vorstehenden Kontaktfahnen eine Korrosionsgefahr mit sich.

Zum Vermeidung dieser Nachteile ist es darüber hinaus bekannt (WO 2007/128384 A2), zwischen der Verbindungsmuffe und den zu verbindenden Rohren aus thermoplastischem Kunststoff je einen in sich geschlossenen Ring aus einem Lochblech einzulegen, um dann mit Hilfe einer die Verbindungsmuffe im Bereich der Lochblechringe umschließenden Induktionsspule in den Lochblechringen Wirbelströme zu induzieren, über die das Lochblech erwärmt und im Anschluss daran der thermoplastische Kunststoff der Verbindungsmuffe und der zu verbindenden Rohre aufgeschmolzen wird, sodass sich durch das Lochblech hindurch wieder eine innige Schweißverbindung zwischen der Schweißmuffe und den Kunststoffrohren einstellt. Voraussetzung hiefür ist aber, dass die Lochblechringe spielfrei sowohl an der Schweißmuffe als auch an den Kunststoffrohren anliegen, was enge Toleranzen erfordert, die bei einer Schweißverbindung beim Verlegen der Schüsse einer Fernwärmeleitung vor Ort nicht sichergestellt werden können.

Der Erfindung liegt somit die Aufgabe zugrunde, ein Verfahren zum Verbinden zweier Schüsse einer Fernwärmeleitung der eingangs geschilderten Art so auszugestalten, dass eine vorteilhafte, allen Belastungsanforderungen entsprechende Schweißverbindung zwischen der Verbindungsmuffe und den Enden der Mantelrohre der miteinander verschweißten Stahlrohre gewährleistet werden kann.

Die Erfindung löst die gestellte Aufgabe dadurch, dass die um die Enden der Mantelrohre gelegten Streifen je einander in Umfangsrichtung überlappende, miteinander verhakte Endabschnitte bilden und mit Hilfe von die Verbindungsmuffe außen umschließenden Induktionsspulen erwärmt werden.

Da zur elektrischen Erwärmung der Fügezonen keine vorgefertigten, in sich geschlossenen Leiterringe, sondern Streifen eines Streckmetallgitters eingesetzt werden, die in Umfangsrichtung um die Enden der Mantelrohre der Stahlrohre so gewunden werden, dass sich ihre Endabschnitte jeweils überlappen, kann ein spielfreies Anliegen dieser Streifen aus dem Streckmetallgitter an den Mantelrohren ohne weiteres gewährleistet werden. Die einander überlappenden Endabschnitte jedes Streifens sind ja lediglich zu verhaken, wobei es häufig ausreicht, in zumindest einem der einander überlappenden Endabschnitte der Streifen einen Längsschlitz vorzusehen, in den der andere Endabschnitt eingreift, sodass sich zwischen den Endabschnitten eine Verhakung insbesondere über die Gittermaschen des Streckgitters ergibt. Für eine Verhakung, die größere Zugkräfte aufnehmen kann, empfehlen sich allerdings Querschlitze auf einander gegenüberliegenden Längsrändern des jeweiligen Streifens in einem gegenseitigen Abstand, der dem Außenumfang der Mantelrohre entspricht. Diese Querschlitze können mit ausreichender Genauigkeit vor Ort angebracht werden.

Nach einem Umschlingen der Mantelrohre mit den Streifen aus einem Streckmetallgitter und der Verhakung der Streifen kann die Verbindungsmuffe über diese Streifen auf die Enden der Mantelrohre aufgeschoben werden, wobei ein das Aufschieben erleichterndes Führungsspiel zulässig ist, weil die thermoplastische Verbindungsmuffe mit einem Memory-Effekt gefertigt werden kann, der bei der Erwärmung der Verbindungsmuffe deren Schrumpfung bewirkt, sodass das Führungsspiel ausgeglichen und eine dichte Anlage der Verbindungsmuffe an den Mantelrohren bzw. den zu Ringen geschlossenen Streifen aus einem Streckmetallgitter als Voraussetzung für eine gute Schweißverbindung zwischen der Verbindungsmuffe und den Mantelrohren durch das Streckmetallgitter hindurch gewährleistet wird, wenn über eine außen um die Verbindungsmuffe im Bereich der Fügezonen gelegte Induktionsspule in den zu Ringen geschlossenen Streckmetallgittern Ströme induziert werden.

Besonders vorteilhafte Verhältnisse ergeben sich, wenn zur Verbindung der Verbindungsmuffe mit den beiden Mantelrohren um jedes Mantelrohr zwei Streifen eines Streckmetallgitters mit axialem Abstand voneinander gelegt werden und wenn die beiden Streifen des Streckmetallgitters auf jedem Mantelrohr voneinander unabhängig durch Induktion erwärmt werden, weil in diesem Fall jeder Streifen aus einem Streckmetallgitter für eine gesonderte Schweißverbindung sorgt, die für sich den auftretenden mechanischen Belastungen und Dichtheitsanforderungen genügt. Durch das Vorsehen zweier solcher Schweißverbindungen wird somit eine doppelte Sicherheit erreicht.

Wesentlich für die Ausbildung der Schweißverbindungen zwischen der Verbindungsmuffe und den Mantelrohren der Schüsse einer Fernwärmeleitung ist, dass mit Hilfe der metallischen Einlage zwischen der Verbindungsmuffe und den Mantelrohren der thermoplastische Werkstoff sowohl auf Seite der Verbindungsmuffe als auch auf Seite der Mantelrohre ausreichend gleichmäßig aufgeschmolzen werden kann, um durch die mit entsprechenden Durchtritten versehene Einlage hindurch eine entsprechende Schmelzverbindung herzustellen. Diese Anforderungen werden durch einen Streifen eines Streckmetallgitters mit einer den Außenumfang des Mantelrohrs übersteigenden Länge erfüllt, wenn zur Verhakung der einander überlappenden Endabschnitte des zu einem geschlossenen Ring gebogenen Streifens in den Endabschnitten Schlitze vorgesehen werden, um die einander überlappenden Endabschnitte des zu einem Ring gebogenen Streifens miteinander vor Ort verbinden zu können. Im einfachsten Fall können diese Schlitze in Streifenlängsrichtung verlaufen, sodass die durch die Längsschlitze voneinander getrennten Lappen der Endabschnitte einander beim Fügen der Endabschnitte abwechselnd übergreifen und so in Verbindung mit den Maschen des Streckgitters den zu einem Ring um das Mantelrohr gebogenen Streifen in Anlage am Mantelrohr zu halten.

Damit größere Zugkräfte übernommen werden können, können auf einander gegenüberliegenden Längsrändern zwei je einen Endabschnitt des Streifens bestimmende Querschlitze in einem gegenseitigen, dem Umfang des Mantelrohrs entsprechenden Abstand in Streifenlängsrichtung vorgesehen werden. Über diese Querschlitze, die sich vorzugsweise jeweils über die halbe Streifenbreite des Streckmetallgitters erstrecken, kann der um ein Mantelrohr gelegte Streifen zu einem Ring geschlossen werden, wobei die über die Querschlitze miteinander verhakten Endabschnitte vorzugsweise vom umlaufenden Streifen abgedeckt werden, sodass die über die Querschlitze vorstehenden Endabschnitte der Streifen das Aufschieben der Verbindungsmuffe nicht beeinträchtigen können. Besonders einfache Handhabungsbedingungen werden in diesem Zusammenhang erreicht, wenn die die Endabschnitte des Streifens bestimmenden Querschlitze unter einem spitzen Winkel gegenüber der Streifenlängsrichtung verlaufen. Mit einem solchen Querschlitzverlauf lassen sich allenfalls vorhandene Toleranzen hinsichtlich der Umfangslänge der zu einem Ring geschlossenen Streifen ausgleichen, weil aufgrund der Neigung der Querschlitze gegenüber der Streifenlängsrichtung mit der gegenseitigen Einstecktiefe der ineinandergreifenden Querschlitze Einfluss auf die Umfangslänge der zu einem Ring geschlossenen Streifen genommen werden kann.

Die Dichtheit der Schweißverbindungen zwischen der Verbindungsmuffe und den Mantelrohren hängt unter Umständen von den möglichen Kriechwegen eindringender Feuchtigkeit entlang der Streckmetallgitter und damit von der Breite der Streifen aus diesem Streckmetallgitter ab. Um die Länge der Kriechwege und damit die Dichtheitsanforderungen zu vergrößern, kann der Streifen aus dem Streckmetallgitter wenigstens zwei gegeneinander auf Lücke versetzte Längsreihen von Langlöchern aufweisen, die somit die Kriechwege von einem Längsrand zum anderen Längsrand des Streifens aus einem Streckmetallgitter durch Kriechwegabschnitte in Streifenlängsrichtung vergrößern.

Besonders günstige Bedingungen hinsichtlich der Dichtheit der Schweißverbindungen zwischen der Verbindungsmuffe und den Mantelrohren haben sich in überraschenderweise mit einem Streifen eines Streckmetallgitters ergeben, der auf beiden Längsseiten über die Streifenlänge durchgehend mit einander gegenüberliegenden, in ihrer Grundform dreieckigen Randaussparungen versehen ist, die in den Endabschnitten die Schlitze zum Verhaken bilden. Diese dreieckigen Randaussparungen erübrigen das Vorsehen gesonderter Schlitze zum Verhaken der Endabschnitte des zu einem Ring geformten Streifens und bieten vorteilhafte Erwärmungsbedingungen für die Schweißnaht. Zur Verbesserung dieser Bedingungen kann der Streifen im Bereich zwischen den dreieckigen Randaussparungen rautenförmige Aussparungen aufweisen, die in einer Längsreihe hintereinander angeordnet sind und einerseits die Verteilung der induzierten Wirbelströme und anderseits die Kriechwege für allenfalls in den Schweißnahtbereich gelangende Feuchtigkeit beeinflussen.

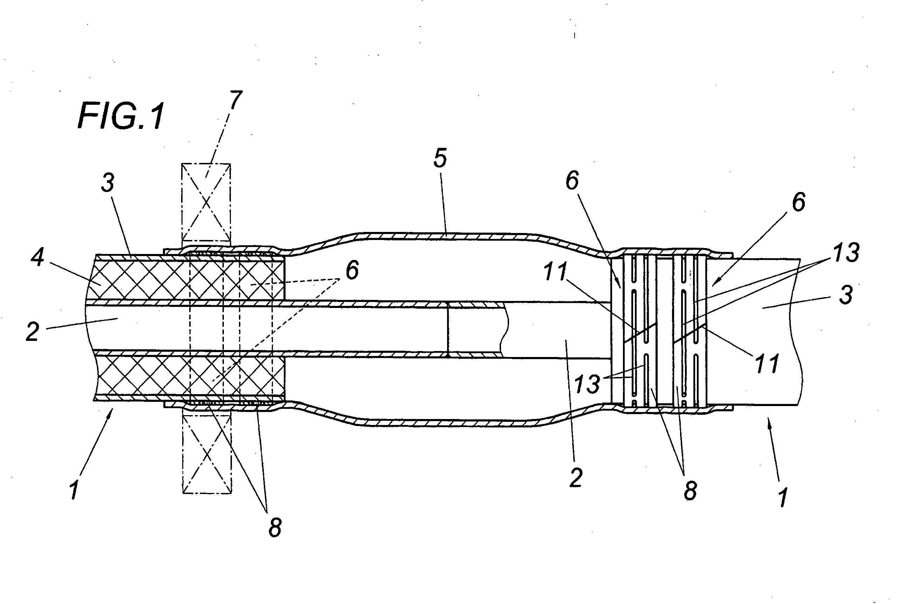

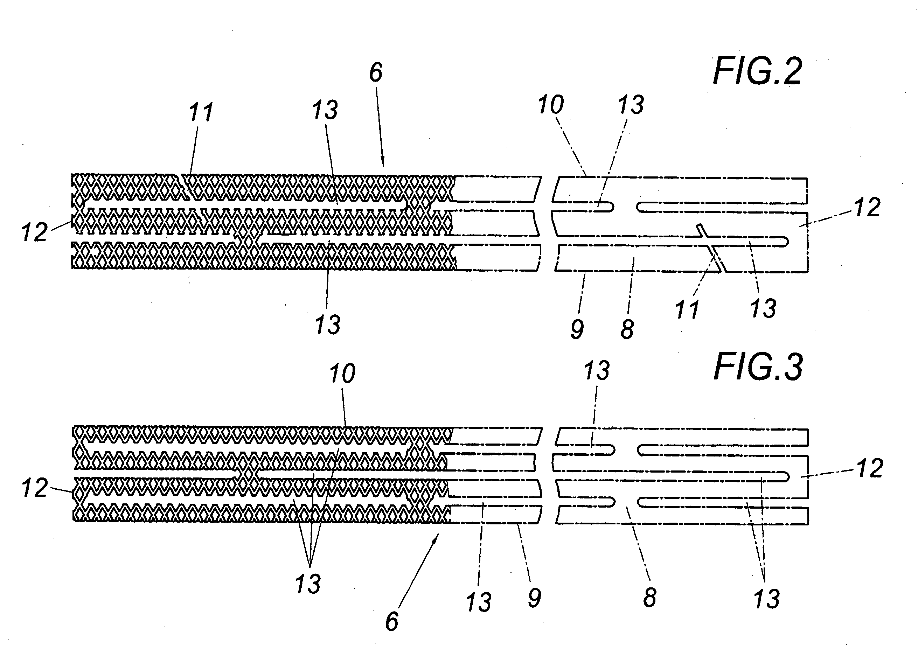

Das erfindungsgemäße Verfahren wird anhand der Zeichnung näher erläutert. Es zeigen
- Fig. 1: eine Schweißverbindung zwischen zwei Schüssen einer Fernwärmeleitung in einem Längsschnitt,
- Fig.: 2 eine metallische Einlage zum Verschweißen der thermoplastischen Mantelrohre zweier miteinander verschweißter Stahlrohre einer Fernwärmeleitung mit einer thermoplastischen Verbindungsmuffe in einer Draufsicht in einem größeren Maßstab,
- Fig.: 3 eine im Wesentlichen der Fig. 2 entsprechende Darstellung einer Konstruktionsvariante einer solchen metallischen Einlage,
- Fig.: 4 die zu einem Ring verhakte metallische Einlage ausschnittsweise im Bereich der miteinander verhakten Endabschnitte in einer Draufsicht in einem größeren Maßstab und

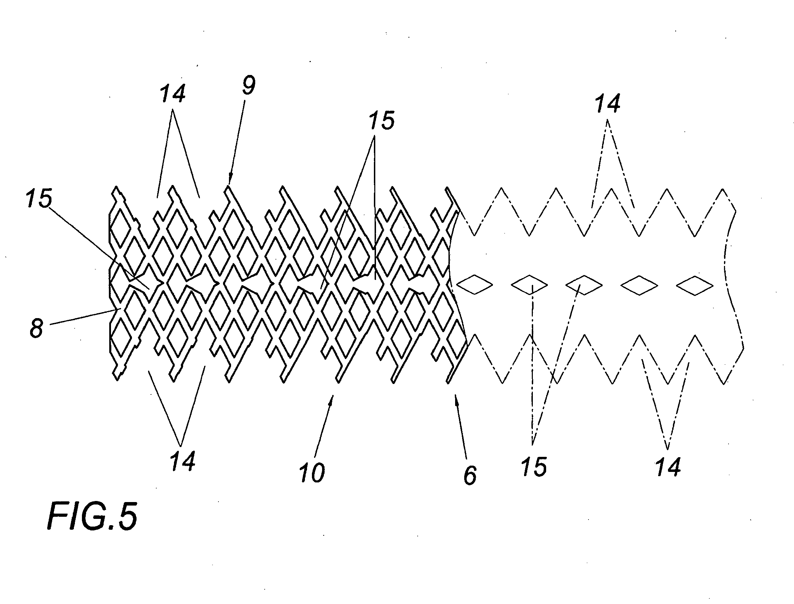

- Fig. 5: eine weitere Ausführungsform einer metallischen Einlage ausschnittsweise in einer Draufsicht in einem größeren Maßstab.

Wie der Fig. 1 entnommen werden kann, umfassen die Schüsse 1 einer Fernwärmeleitung jeweils ein Stahlrohr 2 zur Aufnahme eines Wärmeträgers und ein Mantelrohr 3 aus einem thermoplastischen Kunststoff, das eine Wärmedämmung 4 umhüllt. Um bei der Verlegung einer Fernwärmeleitung zwei Schüsse 1 vor Ort miteinander zu verbinden, werden nach dem Aufschieben einer Verbindungsmuffe 5 auf das Mantelrohr 3 eines Schusses 1 die stirnseitig vorstehenden Stahlrohre 2 miteinander verschweißt, bevor die beiden Mantelrohre 3 durch die Verbindungsmuffe 5, die wie die Mantelrohre 3 aus einem thermoplastischen Kunststoff gefertigt ist, miteinander verbunden werden. Um zwischen den Mantelrohren 3 und der die Mantelrohre 3 stirnseitig übergreifenden Verbindungsmuffe 5 eine vorteilhafte Schweißverbindung zu erreichen, werden zwischen den Mantelrohren 3 und der Verbindungsmuffe 5 metallische Einlagen 6 vorgesehen, in denen mit Hilfe einer außen um die Verbindungsmuffe 5 gelegten Induktionsspule 7 Ströme induziert werden, um über die jeweilige metallische Einlage 6 den thermoplastischen Kunststoff sowohl auf der Seite der Verbindungsmuffe 5 als auch auf der Seite der Mantelrohre 2 aufzuschmelzen und einen Schmelzefluss durch die Einlage 6 hindurch zur innigen Verbindung der Verbindungsmuffe 5 mit den Mantelrohren 3 zu erreichen. Voraussetzung hiefür ist einerseits, dass die metallischen Einlagen 6 einen gleichmäßigen Wärmeübergang auf die zu fügenden Teile ermöglichen und anderseits entsprechende Durchtritte für den Schmelzefluss zwischen den zu fügenden Teilen bereitstellen.

Wie den Fig. 2 und 3 entnommen werden kann, werden die Einlagen 6 aus je einem Streifen 8 eines Streckmetallgitters gefertigt, das eine ausreichende Durchtrittsfläche für die Schmelze zur Verfügung stellt. Da die Länge dieser Streifen 8 den Außenumfang der Mantelrohre 3 übersteigt, können die Streifen 8 aus dem Streckmetallgitter ohne Schwierigkeiten außen um die Mantelrohre 3 gelegt und zu einem Ring geschlossen werden, wie dies in der Fig. 1 angedeutet ist. Zum Schließen der Streifen 8 zu je einem in sich geschlossenen Ring weisen die Streifen 8 gemäß der Fig. 2 auf ihren einander gegenüberliegenden Längsrändern 9, 10 je einen Querschlitz 11 auf, wobei die Querschlitze 11 Endabschnitte 12 bestimmen, die beim Schließen der Streifen 8 durch ein gegenseitiges Eingreifen der einander gegenüberliegenden Querschlitze 11 über die Umfangslänge der dann zu einem Ring in sich geschlossenen Streifen 8 überstehen.

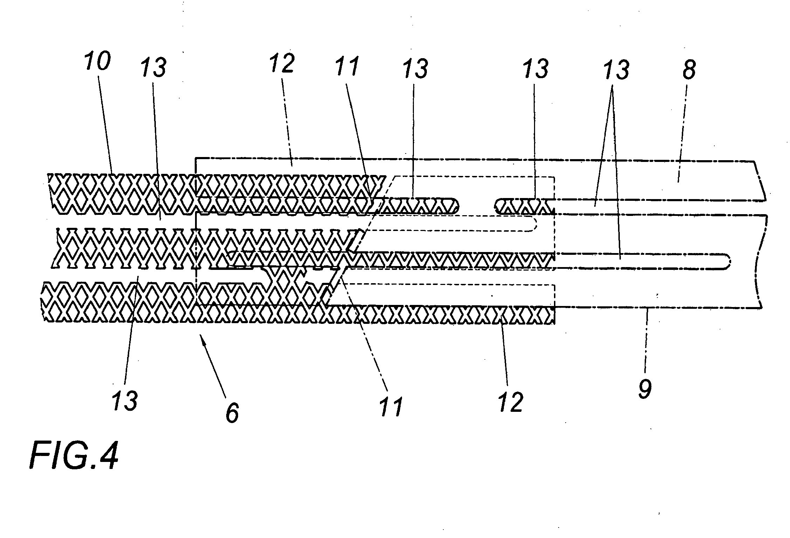

Der Abstand der beiden Querschlitze 11 voneinander in Streifenlängsrichtung muss dem Außenumfang der Mantelrohre 3 entsprechen, wenn die Querschlitze senkrecht zu den Längsrändern 9, 10 ausgerichtet sind. Gemäß der Fig. 2 verlaufen die Querschlitze 11 jedoch unter einem spitzen Winkel gegenüber der Streifenlängsrichtung, was eine Anpassung der Umfangslänge des sich durch die Verhakung der beiden Endabschnitte 12 über die Querschlitze 11 ergebenden Rings an den Außenumfang der Mantelrohre 3 erlaubt. In der Fig. 4, die die verhakten Endabschnitte 12 eines zu einem Ring geschlossenen Streifens 8 zeigt, ist zu erkennen, dass mit zunehmender gegenseitiger Eingriffstiefe der beiden ineinandergreifenden Querschlitze 11 die Umfangslänge des durch den jeweiligen Streifen 8 gebildeten Rings kleiner wird. Dies bedeutet, dass nach einem Umschließen der Mantelrohre 3 durch die Streifen 8 die sich durch diese Streifen 8 ergebenden Ringe in ihrer Umfangslänge genau an den Außenumfang der Mantelrohre 3 angepasst werden können, sodass ein spielfreies Anliegen der in sich geschlossenen Streifen 8 an den Mantelrohren 3 ohne weiteres gewährleistet werden kann. Es bedarf daher zur gleichmäßigen Wärmeübertragung von den Streifen 8 sowohl auf die Mantelrohre 3 als auch auf die Verbindungsmuffe 5 einer zusätzlichen spielfreien Anlage der Verbindungsmuffe 5 an den Streifen 8. Da die Verbindungsmuffen 5 mit einem Memory-Effekt hergestellt werden können, der bei einer Erwärmung der Verbindungsmuffe 5 im Bereich der Streifen 8 ein Aufschrumpfen der Verbindungsmuffe 5 auf die Mantelrohre 3 bzw. auf die die Mantelrohre 3 umschließenden Streifen 8 bewirkt, kann durch eine entsprechende Erwärmung der Verbindungsmuffe 5 beispielsweise mit Hilfe eines Gasbrenners für eine spielfreie Aufnahme der Streifen 8 zwischen den Mantelrohren 3 einerseits und der Verbindungsmuffe 5 anderseits als Voraussetzung für eine gleichmäßige Wärmeabgabe an die zu verbindenden Teile gesorgt werden, wenn in den in sich geschlossenen Streifen 8 über die Induktionsspule 7 Ströme induziert werden.

Aufgrund des Wärmedehnungsverhaltens der aufgeschmolzenen thermoplastischen Kunststoffe weist die Kunststoffschmelze eine Strömungskomponente zu den Längsrändern 9, 10 der Streifen 8 mit der Wirkung auf, dass sich entlang dieser Ränder Schweißwülste ausbilden, die für eine besondere Dichtheit der Schweißverbindungen sorgen.

Besteht die Gefahr, dass Feuchtigkeit zwischen die Verbindungsmuffe 5 und den Mantelrohren 3 eindringt, wobei ein Kriechen der Feuchtigkeit entlang der Gitterstruktur der Streifen 8 aufgrund von Kapillareffekten nicht ausgeschlossen werden kann, so ist für einen möglichst langen Kriechweg zu sorgen, um die Dichtheit der Verbindung gewährleisten zu können. Um den Kriechweg ohne Verbreiterung der Streifen 8 zu verlängern, ist in den Fig. 2 und 3 der Streifen 8 mit in Streifenlängsrichtung mit Abstand hintereinander angeordneten Langlöchern 13 versehen. Nach der Fig. 2 sind zwei Reihen von gegeneinander auf Lücke versetzten Langlöchern 13, nach der Fig. 3 jedoch drei Reihen solcher auf Lücke versetzter Langlöcher 13 vorgesehen. Durch diese Maßnahmen verlängern sich die Kriechwege für Feuchtigkeit von einem Längsrand 9, 10 der Streifen 6 zum gegenüberliegenden Längsrand 10, 9 erheblich. Die Langlöcher 13, die sich im Wesentlichen in Streifenlängsrichtung erstrecken, bedingen aber nicht nur längere Kriechwege für eindringende Feuchtigkeit, sondern geben auch Anlass zur Ausbildung von Schweißwülsten in ihrem Bereich, wodurch aufgrund des Verlaufs dieser Schweißwülste in Streifenlängsrichtung die Dichtheit der Schweißverbindungen unterstützt wird.

Da bei der Anordnung von drei Langlochreihen Querschlitze 11 in den Endabschnitten 12 zumindest einen äußeren der durch die Langlöcher 13 voneinander getrennten Längslappen vom Streifen abtrennen, wird gemäß der Fig. 3 auf solche Querschlitze 11 verzichtet. Die Endabschnitte 12 können über die zumindest zum Teil endseitig offenen Langlöcher 13 miteinander verhakt werden, indem die beidseits eines solchen offenen Langlochs 13 gebildeten Lappen der Endabschnitte den gegenüberliegenden Endabschnitt 12 des zu einem Ring gebogenen Streifens 8 abwechselnd auf unterschiedlichen Seiten überlappen.

Gemäß dem Ausführungsbeispiel nach der Fig. 5 wird die Einlage 6 wiederum aus einem Streifen 8 eines Streckmetallgitters gebildet, doch weisen die beiden Längsränder 9, 10 einander gegenüberliegende dreieckige Randaussparungen 14 auf, die über die Streifenlänge durchgehend angeordnet sind. Außerdem sind im Bereich zwischen den einander gegenüberliegenden dreieckigen Randaussparungen 14 rautenförmigen Randaussparungen 15 vorgesehen, die in einer Längsreihe hintereinander angeordnet sind. Aufgrund dieser besonderen Ausbildung des Streifens 8 aus einem Streckmetallgitter werden besonders vorteilhafte Voraussetzungen für die Ausbildung einer dichten Schweißnaht zwischen der Muffe 5 und den beiden Schüssen 1 der anschließenden Mantelrohre 3 erreicht. Außerdem können die Randaussparungen 14 zum Verhaken der einander beim Schließen des Streifens 8 zu einem geschlossen Ring überlappenden Endabschnitte genützt werden.

## Patentansprüche

1. Verfahren zum Verbinden zweier Schüsse (1) einer Fernwärmeleitung, die jeweils ein Stahlrohr (2) zur Führung eines Wärmeträgers, ein Mantelrohr (3) aus einem thermoplastischen Kunststoff zur Umhüllung einer Wärmedämmung (4) sowie eine thermoplastische Verbindungsmuffe (5) für die Mantelrohre (3) aufweisen, um deren Enden nach einem Verschweißen der Stahlrohre (2) Streifen (8) eines Streckmetallgitters als Einlage (6) spielfrei gelegt werden, bevor die Verbindungsmuffe (5) auf die Mantelrohre (3) aufgeschoben und die Enden der Mantelrohre (3) mit der Verbindungsmuffe (5) durch ein elektrisches Erwärmen der Einlagen (6) verschweißt werden, **dadurch gekennzeichnet, dass** die um die Enden der Mantelrohre (3) gelegten Streifen (8) je einander in Umfangsrichtung überlappende, miteinander verhakte Endabschnitte (12) bilden und mit Hilfe von die Verbindungsmuffe (5) außen umschließenden Induktionsspulen (7) erwärmt werden.

2. Verfahren nach Anspruch 1, **dadurch gekennzeichnet, dass** zur Verbindung der Verbindungsmuffe (5) mit den beiden Mantelrohren (3) um jedes Mantelrohr (3) zwei Streifen (8) eines Streckmetallgitters mit axialem Abstand voneinander gelegt werden und dass die beiden Streifen (8) des Streckmetallgitters auf jedem Mantelrohr (3) voneinander unabhängig durch Induktion erwärmt werden.

3. Fernwärmeleitung mit zwei miteinander verschweißten Stahlrohren (2) und mit einer metallischen Einlage (6) zum Verschweißen der thermoplastischen Mantelrohre (3) der Stahlrohre mit einer thermoplastischen Verbindungsmuffe (5), wobei die Einlage (6) einen Streifen (8) eines Streckmetallgitters mit einer den Außenumfang des Mantelrohrs (3) übersteigenden Länge umfasst, und wobei zur Verhakung der einander überlappenden Endabschnitte (12) des zu einem geschlossenen Ring gebogenen Streifens (8) in den Endabschnitten (12) Schlitze vorgesehen sind.

4. Fernwärmeleitung nach Anspruch 3, **dadurch gekennzeichnet, dass** im Streifen (8) auf einander gegenüberliegenden Längsrändern (9, 10) zwei je einen Endabschnitt (12) des Streifens (8) bestimmende Querschlitze (11) in einem gegenseitigen, dem Umfang des Mantelrohrs (3) entsprechenden Abstand in Streifenlängsrichtung vorgesehen sind.

5. Fernwärmeleitung nach Anspruch 4, **dadurch gekennzeichnet, dass** die die Endabschnitte (12) des Streifens (8) bestimmenden Querschlitze (11) unter einem spitzen Winkel gegenüber der Streifenlängsrichtung verlaufen.

6. Fernwärmeleitung nach einem der Ansprüche 3 bis 5, **dadurch gekennzeichnet, dass** der Streifen (8) aus dem Streckmetallgitter wenigstens zwei gegeneinander auf Lücke versetzte Längsreihen von Langlöchern (13) aufweist.

7. Fernwärmeleitung nach Anspruch 3, **dadurch gekennzeichnet, dass** der Streifen (8) auf beiden Längsseiten (9, 10) über die Streifenlänge durchgehend mit einander gegenüberliegenden, in ihrer Grundform dreieckigen Randaussparungen (14) versehen ist, die in den Endabschnitten (12) die Schlitze zum Verhaken bilden.

8. Fernwärmeleitung nach Anspruch 7, **dadurch gekennzeichnet, dass** der Streifen (8) im Bereich zwischen den dreieckigen Randaussparungen (14) rautenförmige Aussparungen (15) aufweist, die in einer Längsreihe hintereinander angeordnet sind.

## Claims

1. Method for connecting two sections (1) of a district heating line, which comprise in each case a steel pipe (2) for carrying a heat carrier, a casing pipe (3) made of a thermoplastic synthetic material for encasing a heat insulator (4), and a thermoplastic connecting sleeve (5) for the casing pipes (3), around the ends of which, after welding of the steel pipes (2), strips (8) of an expanded metal grid are laid without play as an insert (6) before the connecting sleeve (5) is slid onto the casing pipes (3) and the ends of the casing pipes (3) are welded to the connecting sleeve (5) by electrical heating of the inserts (6), **characterised in that** the strips (8) laid around the ends of the casing pipes (3) form end portions (12), each being caught on one another and overlapping one another in the circumferential direction, and are heated with the aid of induction coils (7) surrounding the outside of the connecting sleeve (5).

2. Method as claimed in claim 1, **characterised in that** in order to connect the connecting sleeve (5) to the two casing pipes (3) two strips (8) of an expanded metal grid are laid axially spaced apart from one another around each casing pipe (3), and that the two strips (8) of the expanded metal grid are heated by induction independently of one another on each casing pipe (3).

3. District heating line having two steel pipes (2), which are welded to one another, and having a metal insert (6) for welding the thermoplastic casing pipes (3) of the steel pipes to a thermoplastic connecting sleeve (5), wherein the insert (6) comprises a strip (8) of an expanded metal grid having a length exceeding the outer circumference of the casing pipe (3), and wherein slits are provided in order to catch the mutually overlapping end portions (12) of the strip (8), which is bent to form a closed ring, in the end portions (12).

4. District heating line as claimed in claim 3, **characterised in that**, in the strip (8), on mutually opposing long edges (9, 10), two transverse slits (11), each determining an end portion (12) of the strip (8), are provided at a mutual spacing, corresponding to the circumference of the casing pipe (3), in the longitudinal direction of the strip.

5. District heating line as claimed in claim 4, **characterised in that** the transverse slits (11) determining the end portions (12) of the strip (8) extend at an acute angle with respect to the longitudinal direction of the strip.

6. District heating line as claimed in any one of claims 3 to 5, **characterised in that** the strip (8) of the expanded metal grid comprises at least two mutually offset longitudinal rows of elongate holes (13).

7. District heating line as claimed in claim 3, **characterised in that** the strip (8) is provided on both long sides (9, 10) throughout the strip length with mutually opposing edge cut-outs (14) which are triangular in their basic shape and which form the slits for catching purposes in the end portions (12).

8. District heating line as claimed in claim 7, **characterised in that**, in the region between the triangular edge cut-outs (14), the strip (8) has lozenge-shaped cut-outs (15) which are disposed one behind the other in a longitudinal row.

## Revendications

1. Procédé pour relier deux tronçons (1) d'une conduite de chauffage à distance, qui présentent respectivement un tuyau en acier (2) pour conduire un fluide caloporteur, un fourreau (3) en une matière thermoplastique pour l'enrobage d'une isolation thermique (4) ainsi qu'un manchon de raccordement (5) thermoplastique pour les fourreaux (3), autour des extrémités desquels des bandes (8) d'une grille en métal déployé en tant que pièce intercalaire (6) sont disposées sans jeu après un soudage des tuyaux en acier (2), avant que les manchons de raccordement (5) soient glissés sur les fourreaux (3) et que les extrémités des fourreaux (3) soient soudées avec le manchon de raccordement (5) par un chauffage électrique des pièces intercalaires (6), **caractérisé en ce que** les bandes (8) placées autour des extrémités des fourreaux (3) forment des sections d'extrémité (12) accrochées ensemble, se chevauchant respectivement dans le sens circonférentiel et **en ce qu'**elles sont chauffées à l'aide de bobines d'induction (7) enveloppant le manchon de raccordement (5) à l'extérieur.

2. Procédé selon la revendication 1, **caractérisé en ce que** pour relier le manchon de raccordement (5) aux deux fourreaux (3), deux bandes (8) d'une grille en métal déployé sont disposées, espacées axialement l'une de l'autre, autour de chaque fourreau (3) et **en ce que** les deux bandes (8) de la grille en métal déployé sont chauffées sur chaque fourreau (3), indépendamment l'une de l'autre, par induction.

3. Conduite de chauffage à distance avec deux tuyaux en acier (2) soudés ensemble et avec une pièce intercalaire (6) métallique pour le soudage des fourreaux (3) thermoplastiques des tuyaux en acier, avec un manchon de raccordement (5) thermoplastique, la pièce intercalaire (6) comprenant une bande (8) d'une grille en métal déployé avec une longueur supérieure à la périphérie extérieure du fourreau (3), et des fentes étant prévues pour accrocher les sections d'extrémité (12) se chevauchant de la bande (8) pliée en un anneau fermé, dans les sections d'extrémité (12).

4. Conduite de chauffage à distance selon la revendication 3, **caractérisée en ce que** dans la bande (8) sont prévues, sur des bords longitudinaux (9, 10) opposés, deux fentes transversales (11) définissant chacune une section d'extrémité (12) de la bande (8), dans un espacement respectif, correspondant à la circonférence du fourreau (3), dans le sens longitudinal de la bande.

5. Conduite de chauffage à distance selon la revendication 4, **caractérisée en ce que** les fentes transversales (11) définissant les sections d'extrémité (12) de la bande (8) forment un angle aigu par rapport au sens longitudinal de la bande.

6. Conduite de chauffage à distance selon l'une des revendications 3 à 5, **caractérisée en ce que** la bande (8) de grille en métal déployé présente au moins deux rangées longitudinales décalées en quinconce de fentes longitudinales (13).

7. Conduite de chauffage à distance selon la revendication 3, **caractérisée en ce que** la bande (8) est munie, sur les deux côtés longitudinaux (9, 10), sur toute la longueur de la bande, d'évidements marginaux (14), opposés, triangulaires dans leur forme de base, qui forment dans les sections d'extrémité (12) les fentes pour ancrage.

8. Conduite de chauffage à distance selon la revendication 7, **caractérisée en ce que** les bandes (8) présentent dans la zone entre les évidements marginaux (14) triangulaires, des évidements (15) en forme de losange qui sont disposés les uns derrières les autres en une rangée longitudinale.
